# EUROPEAN PATENT SPECIFICATION

(11) **EP 3 901 492 B1**
(45) Date of publication and mention of the grant of the patent: **13.12.2023**
(21) Application number: 21169780.0
(22) Date of filing: 22.04.2021
(51) Int. Cl.: F16H 57/04, F15B 21/00, F16N 27/02

(54) **HYDRAULIC ARRANGEMENT FOR MANAGING RETURN OIL FLOW INTO A WORK VEHICLE**
HYDRAULISCHE ANORDNUNG ZUR STEUERUNG DES ÖLRÜCKFLUSSES IN EIN ARBEITSFAHRZEUG
DISPOSITIF HYDRAULIQUE POUR LA GESTION DU FLUX D'HUILE DE RETOUR DANS UN VÉHICULE DE TRAVAIL

(30) Priority: 23.04.2020 IT 202000008767
(43) Date of publication of application: 27.10.2021
(73) Proprietor: CNH Industrial Italia S.p.A., 10156 Torino (IT)
(72) Inventor: Massarotti, Giorgio Paolo, 41019 Soliera (IT)
(74) Representative: CNH Industrial IP Department

(56) References cited:
- EP-A1- 3 556 722
- DE-A1- 10 042 749
- DE-B- 1 239 074
- JP-A- 2002 089 505

## Description

### TECHNICAL FIELD

The present invention concerns a hydraulic arrangement, in particular a hydraulic system for managing a regenerative oil flow into a work vehicle such as an agricultural or earthmoving vehicle.

### BACKGROUND OF THE INVENTION

Work vehicles such as agricultural vehicles, e.g. a tractor, comprises hydraulic oil circuits for a fluid in pressure, e.g. oil, to operate a plurality of operational elements of the vehicles, such as transmission, steering, brakes and auxiliary valves.

Such fluid in pressure can be provided by a pump or by a reservoir in pressure and it is sent to the aforementioned operational elements and, when use by these latter, is sent to discharge.

As per se known, it is requested that the difference of pressure between the pressure of the fluid sent to the operational elements and the fluid discharged by these latter is maintained as high as possible for reasons of efficiency. Since increasing the pressure of the sent fluid will increase costs, complexity of the circuit and energy consumption, it is known to maintain a low pressure in the oil discharge line.

However, frequently, the return oil is used for lubricating the transmission of the vehicle. Such regenerative lubricating operation can vary according to the operational condition of the vehicle. Indeed, in some operational conditions the transmission may require more flow than other operational conditions.

Document DE 100 42 749 A1 discloses a valve in a return conduit for controlling the return flow to a tank and to a transmission lubrication system, according to the preamble preamble of claim 1.

Accordingly, the pressure at the discharge of the aforementioned operational elements may increase, thereby decreasing the efficiency of the system or requesting to increase the pressure of sent fluid.

On the opposite side, a limitation of pressure in the discharge line will not ensure sufficient oil at the lubricating system of the transmission, thereby leading to potential damages or overheating in the latter.

In view of the above, the need is felt to manage the return oil flow in order to allow the lubrication of the transmission and, at the same time, maintain a low pressure level in the discharge of the operational elements of the work vehicle.

An aim of the present invention is to satisfy the above mentioned needs in a cost-effective and optimized way.

### SUMMARY OF THE INVENTION

The aforementioned aim is reached by a hydraulic arrangement according to claim 1, and a work vehicle according to claim 8. Further embodiments of the invention are set out in the dependent claims.

### DETAILED DESCRIPTION OF THE INVENTION

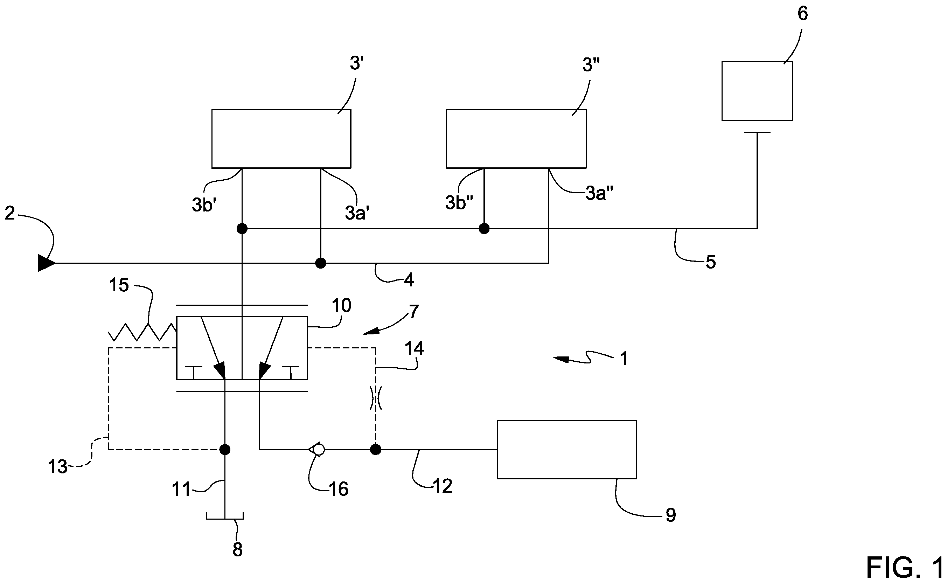

Figure 1 discloses a hydraulic arrangement 1 for managing discharge flow of a work vehicle, not shown.

The hydraulic arrangement receives return fluid, oil, coming from a source 2 of fluid in pressure, e.g. a pump, configured to provide the fluid to different hydraulic operational modules 3', 3" of the work vehicles. For sake of example a module 3' may be represented by remote devices such as steering or brakes and a further module 3" may be represented by power beyond devices such as hydraulic actuators. It is clear that the number and the typology of such modules 3', 3" may vary according to the typology and dimension of the work vehicle.

The source 2 is fluidly connected to a respective first port 3a', 3a' ' of each module 3', 3" via a conduit 4 in order to provide the aforementioned fluid in pressure. Each module further defines a second port 3b', 3b'' fluidly connectable thanks common return conduit 5 of the work vehicle.

The return conduit 5 can be fluidly connected to other hydraulic modules 6 so as to collect the discharged oil from other hydraulic arrangements of the work vehicle.

According to the invention, the hydraulic arrangement 1 comprises valve means 7 fluidly interposed on return conduit 5 and a tank 8 of the work vehicle and a transmission lubrication system 9 of the work vehicle, the valve means 7 are configured to subdivide the flow of discharged fluid between the tank 8 the transmission lubrication system 9 of the work vehicle in order to maintain a preset fixed maximum pressure in return conduit 5.

In particular, valve means 7 comprise a valve 10 fluidly interposed between return conduit 5, a tank conduit 11 fluidly connected to tank 8 and a transmission lubrication conduit 12 fluid connected to transmission lubrication system 9. Preferably such valve 10 is a three-way two positions proportional valve. In particular, such valve 10 is a hydraulic pilot signal controlled valve.

The valve 10 is controlled by a first pressure pilot signal 13 taken downstream to valve 10 but upstream to tank 8, i.e. on conduit 11, acting on a first side of the spool of valve 10 and a second pressure pilot signal 14 taken downstream to valve 10 but upstream to transmission lubrication system 9, i.e. on conduit 12, acting on a second side of the spool of valve 10 opposite to said first side.

In function of the action of such first and second pressure pilot signals 13, 14 the valve 10 can move between a first position into which the discharge flow coming from return conduit 5 is entirely directed to transmission lubrication system 9 and a second position into which the discharge flow coming from return conduit 5 is entirely directed to tank 8.

Advantageously, valve means 7 comprises elastic means 15 configured to exert a force concurrent, i.e. in the same direction, to the pressure exerted by first pressure pilot signal 13 so as to maintain the valve 10 in its first position if the second pilot signal 14 is insufficient to move valve 10.

The elastic means 15 are dimensioned to allow the movement of valve 10 if the pressure in transmission lubrication conduit 12 exceeds a preset pressure value of second pilot signal 14, i.e. of the current pressure in return conduit. 5.

Preferably, such present value is lower than 2.3 bar, better a value comprised between 1 and 2.5 bar. The pressure in tank conduit line 11 instead is usually kept lower than 1 bar.

Furthermore, hydraulic arrangement can comprise a check valve 16 fluidly interposed downstream to valve 10 but upstream to the spilling point of second pressure pilot signal 14 on conduit 12. Such check valve 16 is configured to avoid the passage of fluid only from valve 10 to transmission lubrication system 9.

The operation of a hydraulic arrangement 1 as described above according to the present invention is the following.

In a condition of operation of the work vehicle, the pressure in the transmission lubrication system 9 is lower than the preset value, i.e. lower than 1-2.5 bars; consequently the force exerted by second pressure pilot signal 14 is not sufficient to overcome the force of elastic means 15. In such condition, the valve is maintained in its first position and the oil discharged from the different modules 3', 3'', 6 is directed though valve 10 to be used for transmission lubrication system 9.

In another condition of operation of the work vehicle, the pressure in the transmission lubrication system 9 is high than the preset value, i.e. higher than 2.5 bars; consequently the force exerted by second pressure pilot signal 14 overcomes the force of elastic spring 15. Accordingly, part of the flow from return conduit 5 start to pass though valve 10 towards tank and the first pressure pilot signal 13 starts to act against the force exerted by the second pressure pilot signal 14. In such condition, the valve is maintained in a position intermediate between the first and the second positions and the oil discharged from the different modules 3', 3'', 6 is directed though valve 10 to both transmission lubrication system 9 and tank 8.

In a further condition of operation, similar to the preceding, the pressure in the transmission lubrication system 9 is so high that the force exerted by second pressure pilot signal 14 overcomes the force of elastic means 15 and the force of first pressure pilot signal 13. In such condition, the valve is maintained in its second position and the oil discharged from the different modules 3', 3", 6 is directed though valve 10 to tank 8. The presence of check valve 16 avoids the unwanted passage of fluid at high pressure from transmission lubrication system 9 to return conduit 5 but, only, the generation of second pressure pilot signal 14.

In view of the foregoing, the advantages of a hydraulic arrangement 1 according to the invention are apparent.

Thanks to the hydraulic arrangement 1 the fluid in the return conduit can be used for lubricating the transmission while the pressure is maintained at a predefined low level so as not decrease the efficiency of the work vehicle.

Indeed, the preset pressure value of maximum 3 bars in return conduit 5 is sufficient to allow an efficient operation of modules 3', 3", 6 while maintaining a good level of lubrication. If the lubrication oil is sufficient, i.e. the pressure in conduit 12 is greater than 2.5 bars, then the oil is sent to tank 8 thereby reducing the pressure in return conduit 5 and increasing the performance of modules 3', 3", 6.

Since the return oil is used also for lubricating the transmission, the flow of fluid requested by the work vehicle is reduced and, accordingly, pump displacement is decreased, so as the pump costs. Moreover, since the flow circulation in the hydraulic circuit is decreased, then it is decreased the power consumption.

Moreover, the filter used upstream to pump means in source 2 can be reduced since the fluid required by the hydraulic arrangement can be reduced.

Again, the valve 10 can be realized in plastic material and can be realized particularly of compact size since the pressure of fluid managed by the latter are particularly law.

Furthermore, since the pressure in return conduit are particularly low, i.e. maximum 4 bars, valve 10 can be realized in plastic material with consequently manufacturing cost savings.

It is clear that modifications can be made to the described hydraulic arrangement 1 which do not extend beyond the scope of protection defined by the claims.

For example, as already said, the number of modules 3', 3" may vary.

## Claims

1. Hydraulic arrangement (1) comprising a plurality of hydraulic operative modules (3', 3", 6) of a work vehicle, a tank (8) and a transmission lubrication arrangement (9); said hydraulic arrangement (1) further comprising a return conduit (5) fluidly connected to a discharge (3b', 3b'') of each of said hydraulic operative modules (3', 3'', 6), said hydraulic arrangement (1) further comprises valve means (7) fluidly interposed between said return conduit (5), said tank (8) and said transmission lubrication arrangement (9) of said work vehicle, said valve means (7) being configured to subdivide the flow of fluid in said return conduit (8) between said tank (8) and said transmission lubrication system (9) in order to maintain a preset maximum pressure in said return conduit (5); said hydraulic arrangement is **characterized in that** said valve means (7) comprises a valve (10) controlled by the equilibrium of a first pressure pilot signal (13) taken on a conduit (11) fluidly connecting said valve to said tank (8) and a second pressure pilot signal (14) taken on a conduit (12) fluidly connecting said valve to said transmission lubrication system (9), said first and second pilot signals (13, 14) acting on opposite sides of a spool of said valve (10).

2. Hydraulic arrangement according to claim 1, wherein said valve means (7) comprises elastic means (15) acting on the spool of said valve (10) to generate a force acting concurrent to the pressure exerted by said first pressure pilot signal (13).

3. Hydraulic arrangement according to claim 2, wherein said elastic means (15) generate a preset force so that said valve (10) allows the fluidic communication of said return conduit (5) and said transmission lubrication system (9) till said second pressure pilot signal (14) reaches a preset pressure level.

4. Hydraulic arrangement according to claim 3, wherein said preset pressure level is lower than 3 bars.

5. Hydraulic arrangement according to claim 3 or 4, wherein said preset pressure level is comprised between 1 and 3 bars.

6. Hydraulic arrangement according to any of claims 1 to 5, further comprising a check valve (16) fluidly interposed between said valve (10) and said transmission lubrication system (9), said check valve (16) being configured to allow the passage of fluid only from said valve (10) to said transmission lubrication system (9).

7. Hydraulic arrangement according to any of claims 1 to 6, wherein said valve (10) is made of plastic.

8. Work vehicle comprising a hydraulic arrangement (1) according to any of the preceding claims, and a source of fluid in pressure (2) configured to provide fluid in pressure to said hydraulic operative modules (3', 3", 6) .

## Patentansprüche

1. Hydraulische Anordnung (1) umfassend eine Mehrzahl von hydraulischen Betriebsmodulen (3', 3", 6) eines Nutzfahrzeugs, einen Tank (8) und eine Getriebeschmieranordnung (9);
wobei die hydraulische Anordnung (1) des Weiteren eine Rücklaufleitung (5) umfasst, die fluidisch mit einem Auslass (3b', 3b") jedes hydraulischen Betriebsmoduls (3', 3", 6) verbunden ist, wobei die hydraulische Anordnung (1) des Weiteren eine Ventileinrichtung (7) umfasst, die zwischen der Rücklaufleitung (5), dem Tank (8) und der Getriebeschmieranordnung (9) des Nutzfahrzeugs angeordnet ist, wobei die Ventileinrichtung (7) dazu eingerichtet ist, den Fluidfluss in der Rücklaufleitung (5) zwischen dem Tank (8) und der Getriebeschmieranordnung (9) aufzuteilen, um einen voreingestellten maximalen Druck in der Rücklaufleitung (5) aufrechtzuerhalten;
wobei die hydraulische Anordnung **dadurch gekennzeichnet ist, dass**
die Ventileinrichtung (7) ein Ventil (10) umfasst, das durch das Gleichgewicht eines ersten Drucksteuersignals (13), das an einer Leitung (11) abgenommen wird, die das Ventil mit dem Tank (8) fluidisch verbindet, und eines zweiten Drucksteuersignals (14) gesteuert wird, das an einer Leitung (12) abgenommen wird, die das Ventil mit der Getriebeschmieranordnung (9) verbindet, wobei das erste und zweite Steuersignal (13, 14) auf entgegengesetzte Seiten eines Kolbens des Ventils (10) wirken.

2. Hydraulische Anordnung nach Anspruch 1, wobei die Ventileinrichtung (7) eine elastische Einrichtung (15) umfasst, die auf den Kolben des Ventils (10) wirkt, um eine Kraft zu erzeugen, die parallel zu dem Druck wirkt, der von dem ersten Drucksteuersignal (13) aufgebracht wird.

3. Hydraulische Anordnung nach Anspruch 2, wobei die elastische Einrichtung (15) eine voreingestellte Kraft erzeugt, sodass das Ventil (10) die Fluidverbindung zwischen der Rücklaufleitung (5) und der Getriebeschmieranordnung (9) ermöglicht, bis das zweite Drucksteuersignal (14) ein voreingestelltes Druckniveau erreicht.

4. Hydraulische Anordnung nach Anspruch 3, wobei das voreingestellte Druckniveau weniger als 3 Bar beträgt.

5. Hydraulische Anordnung nach Anspruch 3 oder 4, wobei das voreingestellt Druckniveau zwischen 1 und 3 Bar aufweist.

6. Hydraulische Anordnung nach einem der Ansprüche 1 bis 5, des Weiteren ein Rückschlagventil (16) umfassend, das zwischen dem Ventil (10) und der Getriebeschmieranordnung (9) angeordnet ist, wobei das Rückschlagventil (16) dazu eingerichtet ist, den Durchgang von Fluid nur von dem Ventil (10) zu der Getriebeschmieranordnung (9) zu ermöglichen.

7. Hydraulische Anordnung nach einem der Ansprüche 1 bis 6, wobei das Ventil (10) aus Plastik hergestellt ist.

8. Nutzfahrzeug mit einer hydraulischen Anordnung (1) nach einem der vorhergehenden Ansprüche und einer Quelle von mit Druck beaufschlagten Fluid (2), die dazu eingerichtet ist, den hydraulischen Betriebsmodulen (3', 3", 6) mit Druck beaufschlagtes Fluid bereitzustellen.

## Revendications

1. Dispositif hydraulique (1) comprenant une pluralité de modules hydrauliques opérationnels (3', 3", 6) d'un véhicule de travail, un réservoir (8) et un dispositif de lubrification de la transmission (9) ; ledit dispositif hydraulique (1) comprenant en outre un conduit de retour (5) relié fluidiquement à une décharge (3b', 3b") de chacun desdits modules hydrauliques opérationnels (3', 3", 6), ledit dispositif hydraulique (1) comprenant en outre des moyens de vanne (7) interposés fluidiquement entre ledit conduit de retour (5), ledit réservoir (8) et ledit dispositif de lubrification de la transmission (9) dudit véhicule de travail, lesdits moyens de vanne (7) étant configurés pour subdiviser l'écoulement du flux de fluide dans ledit conduit de retour (5) entre ledit réservoir (8) et ledit dispositif de lubrification de la transmission (9) afin de maintenir une pression maximale prédéfinie dans ledit conduit de retour (5) ;
ledit dispositif hydraulique est **caractérisé en ce que** lesdits moyens de vanne (7) comprennent une vanne (10) commandée par l'équilibre d'un premier signal pilote de pression (13) pris sur un conduit (11) reliant fluidiquement ladite vanne audit réservoir (8) et d'un second signal pilote de pression (14) pris sur un conduit (12) reliant fluidiquement ladite vanne audit dispositif de lubrification de la transmission (9), lesdits premier et second signaux pilotes (13, 14) agissant sur les côtés opposés d'une bobine de ladite vanne (10).

2. Dispositif hydraulique selon la revendication 1, dans lequel lesdits moyens de vanne (7) comprennent des moyens élastiques (15) agissant sur la bobine de ladite vanne (10) pour générer une force agissant concurremment à la pression exercée par ledit premier signal pilote de pression (13).

3. Dispositif hydraulique selon la revendication 2, dans lequel lesdits moyens élastiques (15) génèrent une force prédéfinie de sorte que ladite vanne (10) permette la communication fluidique dudit conduit de retour (5) et dudit dispositif de lubrification de la transmission (9) jusqu'à ce que ledit second signal pilote de pression (14) atteigne un niveau de pression prédéfini.

4. Dispositif hydraulique selon la revendication 3, dans lequel ledit niveau de pression prédéfini est inférieur à 3 bars.

5. Dispositif hydraulique selon la revendication 3 ou 4, dans lequel ledit niveau de pression prédéfini est compris entre 1 et 3 bars.

6. Dispositif hydraulique selon l'une quelconque des revendications 1 à 5, comprenant en outre un clapet anti-retour (16) interposé fluidiquement entre ladite vanne (10) et ledit dispositif de lubrification de la transmission (9), ledit clapet anti-retour (16) étant configuré pour permettre le passage de fluide uniquement de ladite vanne (10) vers ledit dispositif de lubrification de la transmission (9).

7. Dispositif hydraulique selon l'une quelconque des revendications 1 à 6, dans lequel ladite vanne (10) est en plastique.

8. Véhicule de travail comprenant un dispositif hydraulique (1) selon l'une quelconque des revendications précédentes, et une source de fluide sous pression (2) configurée pour fournir du fluide sous pression auxdits modules hydrauliques opérationnels (3', 3", 6).
